# EUROPÄISCHE PATENTSCHRIFT

(11) **EP 0 374 303 B1**
(45) Veröffentlichungstag und Bekanntmachung des Hinweises auf die Patenterteilung: **12.10.1994**
(21) Anmeldenummer: 88121580.0
(22) Anmeldetag: 23.12.1988
(51) Int. Cl.: H04B 17/02

(54) **Verfahren zur individuellen Überwachung von Übertragungsabschnitten einer Nachrichtenübertragungsstrecke und Vorrichtung zur Durchführung des Verfahrens**
Process for the individual monitoring of transmission sections of a communications transmission link, and apparatus for carrying out the process
Procédé pour la surveillance individuelle des sections de transmission d'une liaison de transmission d'information et dispositif pour la mise en oeuvre du procédé

(43) Veröffentlichungstag der Anmeldung: 27.06.1990
(73) Patentinhaber: SIEMENS AKTIENGESELLSCHAFT, 80333 München (DE)
(72) Erfinder: Grallert, Hans-Joachim, Dr. -Ing., D-8038 Gröbenzell (DE)

(56) Entgegenhaltungen:
- EP-A- 0 179 465
- EP-A- 0 264 879
- DE-A- 3 004 767
- US-A- 4 397 020

## Beschreibung

Die Erfindung bezieht sich auf ein wie im Oberbegriff des Patentanspruchs 1 angegebenes Verfahren und auf eine Vorrichtung zur Durchführung des Verfahrens.

Ein Verfahren der eingangs genannten Art ist bereits aus den CCITT - Empfehlungen G707 - G709 oder aus der DE-Z/NTZ Band 41 (1988) Heft 10, Seiten 570 bis 574 bekannt. Bei dem bekannten Verfahren werden bytestrukturierte PCM-Signale zusammen mit Paritätsbytes übertragen. Die Paritätsbytes dienen zur Bestimmung der Bitfehlerrate während der Übertragung. Im Regelfall wird die Parität aus den Bits eines ganzen Rahmens oder eines Teil - Rahmens gebildet und diese dann im nachfolgenden Rahmen oder eines Teil - Rahmens übertragen. Das Paritätsbyte wird von jedem Zwischenregenerator kontrolliert und erneut gebildet. Damit können Fehler in einer Übertragungsstrecke auf den betroffenen Regeneratorabschnitt eingegrenzt werden. Ein weiteres Paritätsbyte dient dagegen zur Bitfehlererfassung einer Übertragungsstrecke zwischen zwei Netzknoten.

Dadurch, daß das eine Paritätsbyte jeweils am Anfang des Regeneratorabschnittes und das weitere Paritätsbyte jeweils am Anfang der Übertragungsstrecke neu gebildet wird, lassen sich die Regeneratorabschnitte bzw. Übertragungsstrecken individuell überwachen, so daß Fehler in einer Übertragungsstrecke auf den betroffenen Regeneratorabschnitt bzw. Fehler auf einem Übertragungsweg auf die betroffene Übertragungsstrecke eingegrenzt werden können.

Ferner ist aus der DE-Z telcom report, Spezial, Multiplex- und Leitungseinrichtungen, Seiten 109 bis 114 bekannt, Digitalübertragungssysteme mit einer Einrichtung zur In-Betrieb-Überwachung zu versehen. Dabei enthalten die Zwischenregeneratoren jeweils eine Überwachungsschaltung, die über die laufende digitale Summe Verletzungen der Coderegel überwacht. Von Fehler-Bursts abgesehen, kann man damit auf die Bitfehlerhäufigkeit an der betreffenden Stelle schließen. Die sogenannte Fehlerquote wird in codierter Form zum Ortungsgerät übertragen. Im Ortungsgerät wird somit die Bitfehlerhäufigkeit bei jedem einzelnen Zwischenregenerator erfaßt. Auf diese Weise kann man in einer überwachenden Endstelle durch einen Vergleich der gemessenen Bitfehlerhäufigkeiten auf die Übertragungsqualität der einzelnen Regeneratorfelder schließen, so daß auch hier eine individuelle Überwachung von Übertragungsabschnitten möglich ist.

Wird bei einer fehlerfreien Übertragung der Digitalsignale in den Überwachungsschaltungen eine Bitfehlerrate 0 gemessen, so stellt sich allerdings die Frage, ob dieses Meßergebnis auf einer fehlerfreien Übertragung der Digitalsignale oder auf einem fehlerhaften Arbeiten der Überwachungseinrichtung beruht. Es kann sich daher als zweckmäßig erweisen, zumindest bei Meldung der Bitfehlerrate O eine Überprüfung der Überwachungsschaltungen vorzunehmen.

Aus der DE 3 004 767 B1 ist bereits ein Verfahren zur kombinierten Überwachung und Fehlerortung in Übertragungsstrecken für digitale Signale bekannt. Dieses Verfahren sieht in den Endstellen und den Zwischenregeneratoren eine Überwachung der zu übertragenden digitalen Signale auf wenigstens ein bestimmtes Überwachungskriterium hin vor. In wenigstens einem Zwischengenerator der Übertragungsstrecke wird die Anzahl der dabei festgestellten Fehler über einen bestimmten Zeitraum addiert und gespeichert. Am Ende dieses Zeitraumes wird der Speicherwert mittels zusätzlicher Meldesignale an eine abfragende Endstelle übermittelt. Um eine Kontrolle des Betriebsüberwachungssystems vorzunehmen, werden von einer Endstelle aus in die zu übertragenden digitalen Signale im bestimmten Umfang Fehler eingeblendet, durch die das Überwachungskriterium gezielt verfälscht wird. Da eine Neuberechnung von Paritätsbytes in Regeneratoren bzw. keine Fehlerkorrektur in den Regeneratoren vorgesehen ist, werden die von der Endstelle eingeblendeten Fehler von allen intakten Zwischenregeneratoren mit intakter Auswerteschaltung der jeweiligen Übertragungseinrichtung gemeldet. Von einer Fehlerstelle bleibt die betreffende Fehlermeldung dagegen aus.

In Leitungsausrüstungen, deren Regeneratoren keine Neuberechnung von Paritätsbytes bzw. keine Fehlerkorrektur durchführen, kann man die Überwachungsschaltungen dadurch überprüfen, daß am Anfang der Übertragungsstrecke definierte Codefehler willkürlich eingeblendet werden, die die Nutzsignale bzw. Nutzbytes nicht verfälschen. In diesem Fall werden die aus den definierten Codefehlern resultierenden Bitfehler in jedem Regenerator sowie im empfangsseitigen Leitungsendgerät erkannt und angezeigt, was die Prüfung der Überwachungseinrichtung ermöglicht. Allerdings ist zur individuellen Überwachung von Übertragungsabschnitten ein Vergleich von Bitfehlerraten erforderlich.

Bei einer Überwachungseinrichtung der eingangs genannten Art, bei der jeweils am Anfang der Übertragungsabschnitte aus den Nutzsignalen Zusatzsignale abgeleitet und in die digitalen Nutzsignale eingefügt werden, ist zwar eine individuelle Überwachung von Übertragungsabschnitten durch direkte Bitfehlermessung möglich. Dabei läßt sich jedoch die gewünschte Überprüfung der Überwachungsschaltungen nicht durch einfaches Einblenden von definierten Codefehlern vornehmen.

Aufgabe der Erfindung ist es, ein Verfahren zu schaffen, daß es gestattet, bei einer Übertragungseinrichtung mit aufeinanderfolgenden Übertragungsabschnitten, bei der Zusatzsignale bei ihrer Regenerierung neu berechnet werden, Überwachungsschaltungen ferngesteuert zu prüfen. Außerdem soll eine zweckmäßige Vorrichtung zur Durchführung eines solchen Verfahrens angegeben werden.

Gemäß der Erfindung wird die gestellte Aufgabe bei einem Verfahren der eingangs genannten Art durch die im kennzeichnenden Teil des Patentanspruchs 1 angegebenen Maßnahmen gelöst.

Die individuell überwachten Übertragungsabschnitte können dabei aus einem oder mehreren Regeneratorfeldern bzw. aus einer oder mehreren Übertragungsstrecken bestehen.

Durch die erfindungsgemäßen Maßnahmen ergibt sich der Vorteil, daß sich zugleich die Übertragungsqualität der einzelnen Übertragungsabschnitte unabhängig voneinander bestimmen läßt und die Überwachung der einzelnen Überwachungsschaltungen ohne die Verwendung eines zusätzlichen Übertragungskanals vom Streckenende her ausgelöst werden kann.

Die Nutzsignale können digitale Signale beliebiger Art sein.

Die Dauer, während der das zweite Bildungsgesetz gilt, kann eine vorgegebenen Zeitspanne sein.

Bei einer Übertragung von PCM-Signalen ist es zweckmäßig, die Dauer des Übergangs auf das zweite Bildungsgesetz entsprechend Anspruch 2 zu wählen.

Ein besonders geringer Aufwand ergibt sich dann, wenn entsprechend Anspruch 3 die nach dem ersten Bildungsgesetz abgeleiteten Zusatzsignale Paritätsbytes und die nach dem zweiten Bildungsgesetz gebildeten Zusatzsignale invertierte Paritätsbytes sind. Dies gilt insbesondere für PCM-Signal-Übertragungseinrichtungen der synchronen digitalen Hierarchie, wie sie in den CCITT-Empfehlungen G707, G708 und G709 festgelegt sind und, in denen bereits Vorrichtungen zur Einfügung von Paritätsbytes in den Datenstrom vorgesehen sind.

Bei der gewünschten Überprüfung der Überwachungsschaltungen kann man so vorgehen, daß von einer Endstelle aus über eine Dienstleitung telefonisch auf die bevorstehende Überprüfung hingewiesen wird, so daß von den Überwachungsschaltungen angezeigte Meßergebnisse an Ort und Stelle beobachtet und als Prüfergebnisse gewertet werden können.

Wird entsprechend Anspruch 4 der Übergang vom ersten auf das zweite Bildungsgesetz von einer Endstelle her ausgelöst, zu der die Fehlermeldungen übertragen werden, so läßt sich die Überprüfung auf besonders einfache Weise vornehmen. Um beide Übertragungseinrichtungen einer Übertragungsstrecke mit bidirektionaler Signalübertragung in den Prüfbetrieb zu überführen, wird zweckmäßigerweise entsprechend Anspruch 5 verfahren.

Eine Vorrichtung zur Durchführung des Verfahrens geht aus Anspruch 6 hervor. Die Weiterbildung nach Anspruch 7 ermöglicht eine Auswertung des Prüfergebnisses an zentraler Stelle. Bei Anwendung der Maßnahmen nach Anspruch 8 ist hiefür kein nennenswerter Zusatzaufwand erforderlich.

Ein für die Durchführung des Verfahrens zweckmäßiges Leitungsendgerät geht aus Anspruch 9 hervor. In Anspruch 10 ist ein für das Verfahren zweckmäßgier Zwischenregenerator angegeben.

Die Erfindung wird anhand der in den Figuren dargestellten Ausführungsbeispiele näher erläutert.

Es zeigen
- Fig. 1: eine PCM-Übertragungseinrichtung mit zwei Endstellen und mehreren Zwischenregeneratoren und
- Fig. 2: eine PCM-Übertragungseinrichtung mit zwei Übertragungsstrecken

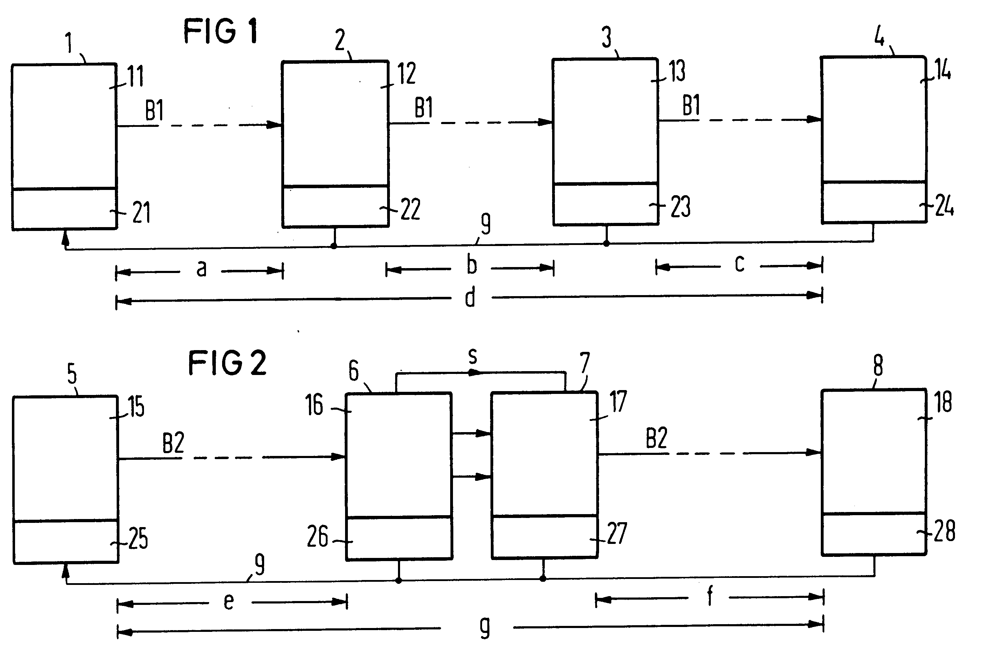

Figur 1 zeigt eine Einrichtung zur Übertragung digitaler Nutzsignale vom Leitungsendgerät 1 zum Leitungsendgerät 4 über die Übertragungsstrecke d.

Die Leitungsendgeräte 1 und 4 enthalten zusätzlich zu einem Multiplexer 11 bzw. Demultiplexer 14 eine Überwachungsschaltung 21 bzw. 24 zur Bitfehlererkennung. Die Zwischenstellen 2 und 3 enthalten jeweils einen Regenerator 12 bzw. 13 und eine Überwachungsschaltung 22 bzw. 23 zur Bitfehlererkennung. Die Überwachungsschaltungen 22 ... 24 sind über den Rückkanal 9 mit der Überwachungsschaltung 21 des Leitungsendgerätes 1 verbunden.

Die Übertragungsstrecke d besteht aus den Regeneratorabschnitten a, b und c, die jeweils einen Übertragungsabschnitt bilden. Zur individuellen Überwachung dieser drei aufeinanderfolgenden Übertragungsabschnitte werden zusätzlich zu den Nutzsignalen Zusatzsignale übertragen. Diese Zusatzsignale werden am Anfang der Regeneratorfelder a, b bzw. c jeweils aus den Nutzsignalen nach einem ersten Bildungsgesetz abgeleitet in die digitalen Nutzsignale eingefügt.

Am Ende der Regeneratorabschnitte a, b und c werden aus den empfangenen Nutzsignalen jeweils Vergleichssignale nach dem ersten Bildungsgesetz abgeleitet. Diese Vergleichssignale werden mit den empfangenen Zusatzsignalen verglichen. Es findet somit ein Vergleich zwischen empfangenen Zusatzsignalen und örtlich gebildeten Vergleichssignalen statt. Dabei werden in vorgegebener Abhängigkeit vom Vergleichsergebnis Fehlermeldungen gebildet und über den Rückkanal 9 an die zentrale Überwachungsschaltung 21 gesendet. Der Rückkanal 9 ist vorzugsweise Bestandteil einer Einrichtung zur In-Betrieb-Überwachung der Übertragungseinrichtung.

Die zentrale Überwachungsschaltung 21 enthält ein Ortungsgerät, mit dessen Hilfe Fehlerstellen geortet werden können. Eine Prüfung der durch die Überwachungsschaltungen gebildeten Überwachungsvorrichtung ihrerseits wird auf die folgende Weise vorgenommen.

Zum Übergang vom normalen Überwachungsbetrieb auf Prüfbetrieb geht das Leitungsendgerät 1 bei der Ableitung der Zusatzsignale für eine vorgegebene Dauer von dem ersten auf ein zweites Bildungsgesetz über. Erkennt die Überwachungsschaltung 22 des Zwischenregenerators 2 die damit verbundenen Bitfehler, so zeigt sie damit an, daß sie fehlerfrei arbeitet. Die Überwachungsschaltung 22 wird somit auf ihre Funktionsfähigkeit geprüft.

Auf den Übertragungsabschnitt a folgt der weitere Übertragungsabschnitt b. Um auch diesen Übertragungsabschnitt b in den Prüfbetrieb überführen zu können, werden am Ende des Übertragungsabschnittes a Vergleichssignale sowohl nach dem ersten als auch nach dem zweiten Bildungsgesetz abgeleitet und jeweils mit den empfangenen Zusatzsignalen verglichen. Bei Identifizierung mehrerer unmittelbar aufeinanderfolgender, nach dem zweiten Bildungsgesetz abgeleiteter Zusatzsignale wird auch bei den über den nachfolgenden Übertragungsabschnitt b zu übertragenden digitalen Signalen für eine vorgegebene Dauer bei der Bildung der Zusatzsignale B1 auf das zweite Bildungsgesetz übergegangen.

Auf diese Weise wird im Prüfbetrieb am Ende eines jeden Übertragungsabschnittes, der einem weiteren Übertragungsabschnitt vorausgeht, bei der Ableitung des Zusatzsignals B1 aus dem Nutzsignal vom ersten auf das zweite Bildungsgesetz übergegangen. Schließlich befindet sich die gesamte Übertragungsstrecke im Prüfbetrieb.

Werden mit Hilfe der Übertragungseinrichtung PCM-Signale übertragen, so wird die Dauer, während der die Zusatzsignale B1 nach dem zweiten Bildungsgesetz vorgenommen wird, zweckmäßigerweise durch eine vorgegebene Zahl n von Impulsrahmen bestimmt. Als Kriterium für den Übergang auf das zweite Bildungsgesetz in einer Zwischenstelle dient in diesem Fall der Empfang einer vorgegebenen Zahl von p Impulsrahmen mit Zusatzsignalen zweiter Art. Dabei gilt p ≦ n. Bei einer bevorzugten Bemessung ist p = n und 5 ≦ p ≦ 8 . Bei einem Impulsrahmen mit der Dauer von 125 µsec dauert es dann höchstens eine Sekunde, bis der letzte von eintausend in Kette geschaltete Regeneratoren in den Prüfbetrieb übergegangen ist.

Das Vefahren läßt sich besonders vorteilhaft bei Übertragungseinrichtungen der sogenannten synchronen digitalen Hierarchie anwenden, wie sie aus dem CCITT-Empfehlungen G707 bis G709 bekannt ist. In diesem Fall enthält die digitale Übertragungsstrecke am Anfang der Leitung einen synchronen Multiplexer und am Ende der Leitung einen synchronen Demultiplexer 14 und im Zuge der Leitung synchrone Regeneratoren 2 und 3. Die Erkennung von Bitfehlern in den Grundleitungsabschnitten bzw. Regeneratorabschnitten a, b und c geschieht durch Paritätsbytes B1, die in jedem Regenerator 12, 13 neu berechnet und in den Datenstrom eingesetzt werden. Gegebenenfalls auftretende Paritätsfehler werden in Überwachungsschaltungen 22, 23 und 24 gezählt, mit Schwellen verglichen und gegebenenfalls in Alarmmeldungen umgesetzt.

In diesem Fall sind die nach dem ersten Bildungsgesetz abgeleiteten Zusatzsignale B1 Paritätsbytes und die nach dem zweiten Bildungsgesetz gebildeten Zusatzsignale B1 vorzugsweise invertierte Paritätsbytes der Nutzsignale. Die Invertierung kann sich ggf. auf einen Teilbereich des Paritätsbytes beziehen.

Zur Prüfung der Überwachungsschaltungen 22 ... 24 bei fehlerfreier Übertragung wird im sendeseitigen synchronen Multiplexer 11 des Leitungsendgerätes 1 das Paritätsbyte B1 durch einen Steuerbefehl für die Dauer von n Rahmen invertiert. Der empfangende synchrone Demultiplexer 12 des Zwischenregenerators 2 erkennt dadurch Bitfehler, meldet diese über die Überwachungsschaltung 22 und den Rückkanal 9 zur zentralen Überwachungsschaltung 21 und berechnet das Paritätsbyte B1 neu.

Wegen dieser Neuberechnung des Paritätsbytes B1 wäre ohne weitere Maßnahmen die Prüfung der Überwachungsschaltung des nachfolgenden Zwischenregenerators 3, gegebenenfalls weiterer Zwischenregeneratoren und des Leitungsendgerätes 4 nicht ohne weiters möglich.

Der Zwischenregenerator 2 enthält jedoch eine einen Vergleicher und einen Zähler umfassende Schaltung, die die p-malige aufeinanderfolgende Inversion des am Signaleingang ankommenden Paritätswortes B1 erkennt. Daraufhin invertiert der Zwischenregenerator 2 seinerseits das neu berechnete Paritätsbyte B1 für die Dauer von ebenfalls von n Rahmen.

Auf diese Weise ist die Prüfung der Überwachungsschaltung 22 des Zwischenregenerators 21, gegebenenfalls weiterer Zwischenregeneratoren und des empfangenden Leitungsendgerätes 4 möglich.

Da die in den Überwachungsschaltungen 22 . .. 24 gewonnen Fehlermeldungen über den Rückkanal zur Überwachungsschaltung 11 des Leitungsendgerätes 1 übertragen werden, stehen die während des Prüfbetriebs in den Überwachungsschaltungen 22 ... 24 ermittelten Bitfehlerraten in der zentralen Überwachungsschaltung 22 zur weiteren Auswertung zur Verfügung.

Figur 2 zeigt eine Einrichtung zur Übertragung digitaler Nutzsignale vom Leitungsendgerät 5 zum Leitungsendgerät 8 über die Übertragungsstrecke g. Die Übertragungsstrecke g besteht aus den Übertragungsstrecken e und f, die jeweils im Digitalsignal-Grund-Leitungsabschnitt sein können.

In einer zwischen den Leitungsendgeräten 5 und 8 befindlichen Zwischenstelle sind zwei Leitungsendgeräte 6 und 7 Rücken an Rücken angeordnet. Als Ganzes gesehen haben die beiden Leitungsendgeräte 6 und 7 im Rahmen des Übertragungsweges g auch die Funktion eines Zwischenregenerators. Zur Prüfung der Überwachungsschaltungen 24 ... 28 der Leitungsendgeräte 5 ... 8 wird daher das anhand von Figur 1 erläuterte Verfahren mit der Maßgabe angewendet, daß die Übertragungsstrecken e und f als Übertragungsabschnitte betrachtet werden. Erkennt das Leitungsendgerät 6 eine Folge von p invertierten Paritätsbytes B2, so veranlaßt es über die Steuerleitung s das Leitungsendgerät 7, invertierte Paritätsbytes B2 auszusenden. In entsprechender Weise kann eine Aussendung invertierter Paritätsbytes B1 ausgelöst werden, und zwar allein oder zusätzlich zu intvertierten Paritätsbytes B2.

Handelt es sich um eine Übertragungseinrichtung der sogenannten synchronen digitalen Hierarchie nach den CCITT-Empfehlungen G707 bis G709, so dient als gegebenenfalls invertiertes Zusatzsignal das dort ebenfalls vorgesehene Paritätsbyte B2.

In den Figuren 1 und 2 sind Übertragungseinrichtungen zur Übertragung von digitalen Signalen in einer Richtung dargestellt. Sind auch Übertragungseinrichtungen zur Signalübertragung in der Gegenrichtung vorhanden, so werden die Überwachungsschaltungen zweckmäßigerweise jeweils zugleich zur Überwachung der Gegenrichtung verwendet. Werden in diesem Fall am Ende der Übertragungsstrecke invertierte Paritätsbytes B1 und/oder B2 empfangen, so veranlaßt das empfangsseitige Leitungsendgerät die Invertierung der betreffenden Paritätsbytes in Gegenrichtung. Gegebenenfalls kann eine solche Invertierung von Paritätsbytes in Gegenrichtung auch in Zwischenstellen der Übertragungsstrecke vorgenommen werden.

### Bezugszeichenliste

- 1: Leitungsendgerät
- 2: Zwischenstelle
- 3: Zwischenstelle
- 4: Leitungsendgerät
- 5: Leitungsendgerät
- 6: Leitungsendgerät
- 7: Leitungsendgerät
- 8: Leitungsendgerät
- 9: Rückkanal
- 11: Multiplexer
- 12: Regenerator
- 13: Regenerator
- 12: Demultiplexer

- 21...28: Überwachungsschaltung

- a...c: Regeneratorabschnitt
- d...f: Übertragungsstrecke
- g: Übertragungsstecke

- B1: erstes Paritätswort
- B2: zweites Paritätswort

## Patentansprüche

1. Verfahren zur individuellen Überwachung wenigstens zweier aufeinanderfolgender Übertragungsabschnitte (a, b, c; e, f) einer Übertragungsstrecke (d, g) zur Übertragung digitaler Nutzsignale, bei der jeweils am Anfang der Übertragungsabschnitte (a, e, c; e, f) aus den Nutzsignalen nach einem ersten Bildungsgesetz Zusatzsignale (B1, B2) abgeleitet und in die digitalen Nutzsignale eingefügt werden, bei der jeweils am Ende der Übertragungsabschnitte (a, b, c; e, f) aus den empfangenen Nutzsignalen Vergleichssignale nach dem ersten Bildungsgesetz abgeleitet und mit den empfangenen Zusatzsignalen (B1, B2) verglichen und mit Hilfe von Überwachungsschaltungen (21 ... 24, 25 ... 28) in vorgegebener Abhängigkeit vom Ergebnis dieses Vergleichs Fehlermeldungen gebildet werden,
**dadurch gekennzeichnet**,
daß zur Prüfung der Fehlermeldungen bei der Ableitung der Zusatzsignale (B1, B2) am Anfang wenigstens zweier der individuell überwachten Übertragungsabschnitte (a, b, c) für eine vorgegebene Dauer von dem ersten auf ein zweites Bildungsgesetz übergangen wird und daß am Ende wenigstens eines einem weiteren Übertragungsabschnitt vorangehenden Übertragungsabschnittes (a, b; e) Vergleichssignale sowohl nach dem ersten als auch Vergleichssignale nach dem zweiten Bildungsgesetz abgeleitet und jeweils mit den empfangenen Zusatzsignalen (B1, B2) verglichen werden und daß bei Identifizierung von nach dem zweiten Bildungsgesetz abgeleiteten Zusatzsignalen während einer vorgegebenen Dauer auch bei den über den nachfolgenden Übertragungsabschnitt zu übertragenden digitalen Signalen ebenfalls für eine vorgegebene Dauer auf nach dem zweiten Bildungsgesetz gebildete Zusatzsignale (B1, B2) übergegangen wird und daß die Erkennung der Bitfehler, die der Übergang auf das zweite Bildungsgesetz verursacht, jeweils als Kriterium für ein fehlerfreies Arbeiten der betreffenden Überwachungsschaltung dient.

2. Verfahren nach Anspruch 1,
**dadurch gekennzeichnet**,
daß bei Übertragung von PCM-Signalen die Ableitung von Zusatzsignalen (B1, B2) nach dem zweiten Bildungsgesetz jeweils für die Dauer einer ersten vorgegebenen Zahl (n) von Impulsrahmen vorgenommen wird und daß als Kriterium für den Übergang auf das zweite Bildungsgesetz in einer nachfolgenden Zwischenstelle der Empfang einer zweiten vorgegebenen Zahl (p) von Impulsrahmen mit Zusatzsignalen zweiter Art dient.

3. Verfahren nach Anspruch 2,
**dadurch gekennnzeichnet**,
daß die nach dem ersten Bildungsgesetz abgeleiteten Zusatzsignale (B1, B2) Paritätsbytes und die nach dem zweiten Bildungsgesetz gebildeten Zusatzsignale (B1, B2) Paritätsbytes sind, die wenigstens in einem Teilbereich invertiert sind.

4. Verfahren einem der Ansprüche 1 bis 3,
**dadurch gekennzeichnet**,
daß der Übergang vom ersten auf das zweite Bildungsgesetz von einer Endstelle (1, 5) her ausgelöst wird, zu der die Fehlermeldungen übertragen werden.

5. Verfahren nach einem der Ansprüche 1 bis 4,
**dadurch gekennzeichnet**,
daß bei einer Übertragungsstrecke mit bidirektionaler Signalübertragung im Falle eines Empfanges von nach dem zweiten Bildungsgesetz gebildeten Paritätsbytes (B1, B2) am Ende der Übertragungsstecke und/oder in einer Zwischenstelle die Paritätsbytes der Gegenrichtung ebenfalls nach dem zweiten Bildungsgesetz gebildet werden.

6. Vorrichtung zur individuellen Überwachung wenigstens zweier aufeinanderfolgender Übertragungsabschnitte (a, b, c; e, f) einer Übertragungsstrecke (d, g) zur Übertragung digitaler Nutzsignale, die Leitungsendgeräte und Regeneratoren aufweist und bei der jeweils am Anfang der Übertragungsabschnitte (a, e, c; e, f) eine Anordnung zur Ableitung von Zusatzsignalen (B1, B2) aus den Nutzsignalen nach einem ersten Bildungsgesetz und zur Einfügung der Zusatzsignale (B1, B2) in die digitalen Nutzsignale vorgesehen ist, bei der jeweils am Ende der Übertragungsabschnitte (a, b, c; e, f) eine Anordnung zur Ableitung von Vergleichssignalen aus den empfangenen Nutzsignalen nach dem ersten Bildungsgesetz und zum Vergleich der Vergleichssignale mit den empfangenen Zusatzsignalen (B1, B2) vorgesehen sind und mit Hilfe von Überwachungsschaltungen (21 ... 24, 25 ... 28) in vorgegebener Abhängigkeit vom Ergebnis dieses Vergleichs Fehlermeldungen gebildet werden, zur Durchführung des Verfahrens nach einem der Ansprüche 1 bis 5,
**dadurch gekennzeichnet**, daß eine Anordnung zur Prüfung der Fehlermeldungen durch Ableitung der Zusatzsignale (B1, B2) nach einem zweiten Bildungsgesetz vorgesehen ist und daß am Ende wenigstens eines einem weiteren Übertragungsabschnitt vorangehenden Übertragungsabschnittes (a, b; e) eine Vorrichtung zur Ableitung von Vergleichssignalen sowohl nach dem ersten als auch nach dem zweiten Bildungsgesetz und eine Vorrichtung zum Vergleich der Vergleichssignale mit den empfangenen Zusatzsignalen (B1, B2) vorgesehen ist und daß die Leitungsendgeräte (1, 4; 5 ...8) synchrone Multiplexer (11, 14 ... 18) und Überwachungsschaltungen (21, 24; 25 ... 28) und die Zwischenstellen (2, 3) synchrone Regeneratoren (12, 13) und Überwachungsschaltungen (22, 23) enthalten und daß in wenigstens einem der Leitungsendgeräte (1) und in wenigstens einem nachfolgenden Zwischenregenerator (2, 3) eine derart steuerbare Vorrichtung zur Erzeugung von Zusatzsignalen vorgesehen ist, daß die Zusatzsignale bei normalem Überwachungsbetrieb nach dem ersten Bildungsgesetz und bei Prüfbetrieb nach dem zweiten Bildungsgesetz gebildet werden, und daß die Erkennung der Bitfehler, die der Übergang auf das zweite Bildungsgesetz verursacht, jeweils als Kriterium für ein fehlerfreies Arbeiten der betreffenden Überwachungsschaltung dient.

7. Vorrichtung nach Anspruch 6,
**dadurch gekennzeichnet**,
daß die Überwachungsschaltung über einen Rückkanal zur Übertragung der Fehlermeldungen zu der am Anfang der Übertragungsstrecke angeordneten Überwachungsschaltung miteinander verbunden sind.

8. Vorrichtung nach Anspruch 7,
**dadurch gekennzeichnet**,
daß der Rückkanal einer Einrichtung zur In-Betrieb-Überwachung angehört.

9. Leitungsendgerät (1) für eine Vorrichtung nach einem der Ansprüche 6 bis 8,
**gekennzeichnet durch**
die Überwachungsschaltung (21) und eine derart steuerbare Vorrichtung zur Erzeugung von Zusatzsignalen, daß die Zusatzsignale bei normalem Überwachungsbetrieb nach dem ersten Bildungsgesetz und bei Prüfbetrieb nach dem zweiten Bildungsgesetz gebildet werden, wobei die Überwachungsschaltung eine Vorrichtung zur Auswertung von über einen Rückkanal (9) empfangenen Fehlermeldungen enthält.

10. Zwischenregenerator für eine Vorrichtung nach Anspruch 6,
**dadurch gekennzeichnet**,
daß er eine Vorrichtung zur Ableitung von Vergleichssignalen aus den empfangenen Nutzsignalen sowohl nach dem ersten als auch nach dem zweiten Bildungsgesetz, eine Vorrichtung zum Vergleich der empfangenen Zusatzsignale mit den beiden örtlich erzeugten Vergleichssignalen und eine Steuervorrichtung enthält, die in Abhängigkeit vom Ergebnis des Vergleichs für die zusammen mit den Nutzsignalen auszusendenden Zusatzsignale das erste oder zweite Bildungsgesetz aktiviert.

## Claims

1. Process for individually monitoring at least two successive transmission sections (a, b, c; e, f) of a transmission link (d, g) for transmitting useful digital signals, in which auxiliary signals (B1, B2) are derived from the useful signals according to a first formation rule each at the start of the transmission sections (a, e, c; e, f) and are inserted into the digital useful signals, in which comparison signals are derived from the received useful signals each at the end of the transmission sections (a, b, c; e, f) according to the first formation rule and are compared with the received auxiliary signals (B1, B2) and error messages are formed with the assistance of monitoring circuits (21...24, 25...28) in a prescribed dependence on the result of this comparison, characterized in that, in order to test the error messages during the derivation of the auxiliary signals (B1, B2), the system is switched over at the start of at least two of the individually monitored transmission sections (a, b, c) from the first to a second formation rule for a prescribed period, and in that both comparison signals according to the first formation rule and comparison signals according to the second formation rule are derived at the end of at least one transmission section (a, b; e) which precedes a further transmission section and are compared in each case with the received auxiliary signals (B1, B2), and in that when auxiliary signals which are derived according to the second formation rule are identified during a prescribed period the system is likewise switched over for a prescribed period to auxiliary signals (B1, B2) formed according to the second formation rule even in the case of digital signals which are to be transmitted via the following transmission detection, and in that the section of the bit errors which are caused by the change-over to the second formation rule serves in each case as a criterion for error-free operation of the respective monitoring circuit.

2. Process according to Claim 1, characterized in that during the transmission of PCM signals the derivation of auxiliary signals (B1, B2) is carried out according to the second formation rule in each case for the period of a first prescribed number (n) of pulse frames, and in that the reception of a second prescribed number (p) of pulse frames with auxiliary signals of the second type serves as a criterion for the change-over to the second formation rule in a subsequent intermediate location.

3. Process according to Claim 2, characterized in that the auxiliary signals (B1, B2) which are derived according to the first formation rule are parity bytes and the auxiliary signals (B1, B2) formed according to the second formation Rule are parity bytes which are inverted at least in a sub-region.

4. Process according to one of Claims 1 to 3, characterized in that the change-over from the first formation rule to the second formation rule is triggered from a terminal (1, 5) to which the error messages are transmitted.

5. Process according to one of Claims 1 to 4, characterized in that, in a transmission link having bidirectional signal transmission in the event of reception of parity bytes (B1, B2) which are formed according to the second formation rule, the parity bytes of the opposing direction are also formed according to the second formation rule at the end of the transmission link and/or at an intermediate location.

6. Device for individually monitoring at least two successive transmission sections (a, b, c; e, f) of a transmission link (d, g) for transmitting useful digital signals, which has line-terminating devices and regenerators, and in which an arrangement for deriving auxiliary signals (B1, B2) from the useful signals according to a first formation rule and for inserting the auxiliary signals (B1, B2) into the useful digital signals is provided in each case at the start of the transmission sections (a, e, c; e, f), in which an arrangement for deriving comparison signals from the received useful signals according to the first formation rule and for comparing the comparison signals with the received auxiliary signals (B1, B2) is provided in each case at the end of the transmission sections (a, b, c; e, f), and error messages are formed with the aid of monitoring circuits (21...24, 25...28) in a prescribed dependence on the result of this comparison, in order to carry out the process according to one of Claims 1 to 5, characterized in that an arrangement for testing the error messages by deriving the auxiliary signals (B1, B2) according to a second formation rule is provided, and in that a device for deriving comparison signals both according to the first formation rule and according to the second formation rule and a device for comparing the comparison signals with the received auxiliary signals (B1, B2) are provided at the end of at least one transmission section (a, b; e) which precedes a further transmission section, and in that the line-terminating devices (1, 4; 5...8) contain synchronous multiplexers (11, 14...18) and monitoring circuits (21, 24; 25....28) and the intermediate locations (2, 3) contain synchronous regenerators (12, 13) and monitoring circuits (22, 23), and in that in at least one of the line-terminating devices (1) and in at least one subsequent intermediate regenerator (2, 3) a device for generating auxiliary signals is provided which can be controlled in such a way that during normal monitoring mode the auxiliary signals are formed according to the first formation rule and during test mode they are formed according to the second formation rule, and in that the detection of the bit errors which are brought about by the change-over to the second formation rule serves in each case as a criterion for error-free operation of the respective monitoring circuit.

7. Device according to Claim 6, characterized in that the monitoring circuits are connected to one another via a feedback channel in order to transmit the error messages to the monitoring circuit arranged at the start of the transmission link.

8. Device according to Claim 7, characterized in that the feedback channel is part of a device for in-operation monitoring.

9. Line-terminating device (1) for a device according to one of Claims 6 to 8, characterized by the monitoring circuit (21) and a device for producing auxiliary signals which can be controlled in such a way that during normal monitoring mode the auxiliary signals are formed according to the first formation rule and during test mode they are formed according to the second formation rule, the monitoring circuit containing a device for evaluating error messages which are received via a feedback channel (9).

10. Intermediate regenerator for a device according to Claim 6, characterized in that it contains a device for deriving comparison signals from the received useful signals both according to the first formation rule and according to the second formation rule, a device for comparing the received auxiliary signals with the two locally generated comparison signals and a control device which activates the first formation rule or second formation rule in dependence on the result of the comparison for the auxiliary signals to be transmitted together with the useful signals.

## Revendications

1. Procédé pour le contrôle individuel d'au moins deux sections de transmission successives (a,b,c; e,f) d'une voie de transmission (d,g) pour la transmission de signaux numériques utiles, selon lequel, au début des sections de transmission (a,b,c; e,f), des signaux supplémentaires (B1,B2) sont dérivés des signaux utiles selon une première loi de formation et sont introduits dans les signaux numériques utiles, et selon lequel à la fin des sections de transmission (a,b,c; e,f), des signaux de comparaison sont dérivés des signaux utiles reçus, conformément à la première loi de formation et sont comparés aux signaux supplémentaires reçus (B1, B2) et des signalisations d'erreurs sont formées à l'aide de circuits de contrôle (21...24, 25...28) d'une manière dépendant de façon prédéterminée du résultat de cette comparaison,
caractérisé par le fait
que pour le contrôle des signalisations d'erreurs, lors de l'obtention des signaux supplémentaires (B1,B2) au début d'au moins deux des sections de transmission (a,b,c) contrôlées individuellement, pendant une durée prédéterminée on passe de la première loi de formation à une seconde loi de formation, et qu'à l'extrémité d'au moins une section de transmission (a,b; e) qui précède une autre section de transmission, des signaux de comparaison sont obtenus aussi bien selon la première loi de formation que selon la seconde loi de formation et sont comparés respectivement aux signaux supplémentaires reçus (B1, B2), et que lors de l'identification de signaux supplémentaires obtenus conformément à la seconde loi de formation, pendant une durée prédéterminée, également dans le cas des signaux numériques devant être transmis par l'intermédiaire de la section de transmission suivante, également pendant une durée prédéterminée on passe à des signaux supplémentaires (B1,B2) formés conformément à la seconde loi de formation, et que l'identification des erreurs sur les bits, qui sont provoquées par le passage à la seconde loi de formation, est utilisée en tant que critère pour un travail sans erreur du circuit de contrôle considéré.

2. Procédé suivant la revendication 1, caractérisé par le fait que lors de la transmission de signaux MIC, l'obtention de signaux supplémentaires (B1, B2) est exécutée conformément à la seconde loi de formation, respectivement pendant la durée d'un premier nombre prédéterminé (n) de trames d'impulsions et qu'on utilise comme critère pour le passage à la seconde loi de formation, dans le poste intermédiaire suivant, la réception d'un second nombre prédéterminé (p) de trames d'impulsions comportant des signaux supplémentaires.

3. Procédé suivant la revendication 2, caractérisé par le fait que les signaux supplémentaires (B1, B2) obtenus conformément à la première loi de formation sont des octets de parité et que les signaux supplémentaires (B1,B2) formés selon la seconde loi de formation sont des octets de parité, qui sont inversés au moins dans une zone partielle.

4. Procédé suivant l'une des revendications 1 à 3, caractérisé par le fait que le passage de la première à la seconde loi de formation est déclenché à partir d'un poste terminal (1, 5), auquel les signalisations d'erreurs sont transmises.

5. Procédé suivant l'une des revendications 1 à 4, caractérisé par le fait que dans le cas d'une section de transmission avec transmission bidirectionnelle des signaux, lors de la réception d'octets de parité (B1,B2) formés conformément à la seconde loi de formation, les octets de parité en sens opposé sont également formés conformément à la seconde loi de formation, à la fin de la section de transmission et/ou dans un poste intermédiaire.

6. Dispositif pour le contrôle d'au moins deux sections de transmission successives (a,b,c; e,f) d'une voie de transmission (e,f) d'une voie de transmission (d,g) pour la transmission de signaux numériques utiles, qui comporte des terminaux de ligne et des régénérateurs et dans lequel il est prévu, respectivement au début des sections de transmission (a,b,c; e,f), un dispositif pour dériver les signaux supplémentaires (B1,B2) à partir des signaux utiles conformément à une première loi de formation et pour l'insertion des signaux supplémentaires (B1,B2) dans les signaux numériques utiles, et dans lequel respectivement à l'extrémité des sections de transmission (a,b,c; e,f), il est prévu un dispositif pour dériver des signaux de comparaison à partir des signaux utiles reçus, conformément à la première loi de formation et pour la comparaison des signaux de comparaison aux signaux supplémentaires reçus (B1,B2), et des signalisations d'erreurs sont formées à l'aide de circuits de contrôle (21...24, 25...28) d'une manière dépendant de façon prédéterminée du résultat de cette comparaison, pour la mise en oeuvre du procédé suivant l'une de revendications 1 à 5,
caractérisé par le fait qu'il est prévu un dispositif pour contrôler les signalisations d'erreurs par obtention des signaux supplémentaires (B1,B2) suivant une seconde loi de formation, et qu'à la fin d'au moins une section de transmission (a,b; e) qui précède une autre section de transmission, il est prévu un dispositif pour dériver les signaux de comparaison aussi bien conformément à la première loi de formation qu'à la seconde loi de formation et un dispositif pour comparer les signaux de comparaison aux signaux supplémentaires reçus (B1,B2), et que les terminaux de lignes (1,4;5...8) contiennent des multiplexeurs synchrones (11,14...18) et des circuits de contrôle (21,24; 25...28), et les postes intermédiaires (2,3) contiennent des régénérateurs synchrones (12,13) et des circuits de contrôle (22,23), et que dans au moins l'un des terminaux de lignes (1) et dans au moins un régénérateur intermédiaire aval (2,3) il est prévu un dispositif de production de signaux supplémentaires, qui est commandable de telle sorte que les signaux utiles sont formés conformément à la première loi de formation lors du fonctionnement de contrôle normal et sont formés conformément à la seconde loi de formation lors du fonctionnement d'essai, et que l'identification des erreurs sur les bits, qui provoque le passage à la seconde loi de formation, est utilisée comme critère pour un fonctionnement sans erreur du circuit de contrôle considéré.

7. Dispositif suivant la revendication 6, caractérisé par le fait que le circuit de contrôle est relié, par l'intermédiaire d'un canal de retour pour la transmission des signalisations d'erreurs, au circuit de contrôle disposé au début de la voie de transmission.

8. Dispositif suivant la revendication 7, caractérisé par le fait que le canal de retour fait partie d'un dispositif servant à réaliser le contrôle en fonctionnement.

9. Terminal de ligne (1) pour un dispositif suivant suivant l'une des revendications 6 à 8, caractérisé par
le circuit de contrôle (21) et un dispositif pour produire des signaux supplémentaires, qui est commandable de telle sorte que les signaux utiles sont formés lors du fonctionnement de contrôle normal conformément à la première loi de formation et, lors du fonctionnement d'essai, conformément à la seconde loi de formation, le circuit de contrôle contenant un dispositif pour évaluer des signalisations d'erreurs reçues par l'intermédiaire d'un canal de retour (9).

10. Régénérateur intermédiaire pour un dispositif suivant la revendication 6, caractérisé par le fait qu'il contient un dispositif pour dériver des signaux de comparaison à partir des signaux utiles reçus aussi bien conformément à la première loi de formation que conformément à la seconde loi de formation, un dispositif pour comparer les signaux utiles reçus aux deux signaux de comparaison produits localement, et un dispositif de commande, qui, en fonction du résultat de la comparaison pour les signaux supplémentaires devant être émis conjointement avec les signaux utiles, active la première ou la seconde loi de formation.
